## Europäisches Patentamt

## European Patent Office

## Office européen des brevets

(19)

(11) Publication number: **0 158 433 B1**

# EUROPEAN PATENT SPECIFICATION

(12)

(45) Date of publication of patent specification: **08.07.92**

(51) Int. Cl.⁵: **G02B 6/44**

(21) Application number: **85301479.3**

(22) Date of filing: **04.03.85**

(54) **Fibre optic cables.**

(30) Priority: **22.03.84 NO 841126**

(43) Date of publication of application:
**16.10.85 Bulletin 85/42**

(45) Publication of the grant of the patent:
**08.07.92 Bulletin 92/28**

(84) Designated Contracting States:
**BE DE GB**

(56) References cited:
**EP-A- 0 017 609      EP-A- 0 029 198**
**DE-A- 2 913 054      DE-U- 8 300 451**
**GB-A- 2 118 735      GB-A- 2 138 168**

**PATENT ABSTRACTS OF JAPAN, vol. 4, no.
153 (P-33)[635], 25th October 1980; & JP - A -
55 100 509**

(73) Proprietor: **ALCATEL N.V.
Strawinskylaan 537 (World Trade Center)
NL-1077 XX Amsterdam(NL)**

(72) Inventor: **Pedersen, Jack Raymond
Festevein 8
N-1500 Moss(NO)**
Inventor: **Thomassen, Per
Gratrostveien 9
N-1555 Son(NO)**

(74) Representative: **Vaufrouard, John Charles
RUFFHEAD & VAUFROUARD Maidstone Road
(S.T.C. Site) Foots Cray
Sidcup Kent DA14 5HT(GB)**

Rank Xerox (UK) Business Services

## Description

This invention relates to fibre optic cables and in particular to fibre optic cables which are capable of maintaining circuit integrity when subjected to fires and high temperatures.

Various constructions of optical fibre cables having fire-resistant characteristics are known. For example Patent Abstracts of Japan, Vol. 4, No. 153 (P-33) discloses a fire-retardant optical cable in which an outer fire-retardant plastic sheath having a cylindrical metal sheath on the inside thereof are applied over a bundle of optical fibres with intervening copper clad wires.

It is also known from published British Patent Application No. GB 2118735A to provide a reinforced optical cable in which to minimize differntial thermal expansion between a cable reinforcement and optical transmission fibres of the cable to at least reduce internal stresses due to ambient temperature variations, the reinforcement and optical fibres have a close co-efficient of linear thermal expansion.

However, the present invention is directed to a fire-resistant fibre optic cable having improved fire resistivity and avoiding the use of any metal elements which tend to downgrade fire resistivity.

According to the present invention there is provided a fire-resistant fibre optic cable comprising a core portion containing at least one central non-metallic tensile element and at least one optical fibre element stranded around said tensile element with full backtwist, a first fire protecting layer of a mica-containing material or other non-metallic material having equivalent fire resistant properties surrounding said core portion, an armoring layer of synthetic material surrounding said first fire protecting layer, a second fire protecting layer of a mica-containing material or other non-metallic material having equivalent fire resistant properties surrounding said armoring layer and a sheath of a self-extinguishing plastics material, wherein said tensile element, said layers and said sheath have substantially the same co-efficient of thermal expansion as said optical fibre element.

A cable made in accordance with the present invention has passed the following test programme: a modified IEC 331, the IEC 332 part 1, as well as the DIN 57472/VDE 0742 part 813 Draft test.

It is important to point out that the existing IEC 331 test specification is not very relevant to fibre optic cables. It is not appropriate to test whether the cable maintains its insulation, - it is more important to test whether the cable is capable of transferring specific information signals in a frequency range up to several MHz. The existing test specifications had therefore to be modified by connecting the fibre optic cable into a signal transmission circuit during the fire test. In this way it was possible to monitor changes in transmission attenuation as a function of temperature and time.

In the modified IEC 331 test the cable was clamped as specified and it was subjected to 75°C for three hours without any increase of the signal transmitted being deleted. The test was interrupted after three hours by manipulating the cable sample with mechanical means until the cable broke. Left alone, the cable would probably operate indefinitely because the ashes of the protective layers effectively prevent flames from reaching the fibres.

In a special fire test including several types of cables, electric as well as fibre optic, the cable of the present invention proved to be the best of the fibre optic cables tested. In fact it proved to be much better than many of the electrical "fire resistant" signalling cables tested.

In the experiment mentioned the cables were placed on a steel tray 5 m long and they were subjected to a fire, resulting in temperatures quickly rising to 120°C. Our fibre cable was in one end connected to a fibre optic laser and in the other end connected to a fibre optic receiver. A recorder showed an increase in the attenuation starting at 25 minutes, and after 28 minutes the circuit was broken. Other samples of fibre optic cables broke down in less than 20 minutes.

The difference in time may seem negligible, but in cases of fires occurring in high risk areas such as off shore installations, hydrocarbon plants, hospitals, telecom switching installations, etc, the additional 10 minutes period may be vital.

When constructing a cable in accordance with the present invention it was attempted to maintain the cable core as in ordinary fibre optic cables in order to prevent the necessity of developing new jointing methods and core designs. The optical fibres were stranded onto the central tensile element with full backtwist to avoid torsional forces in the fibres.

An essential feature of the cable is that it contains no metal elements like wires, bands, tapes or sheaths. Thereby, and by taking other measures, is obtained a cable where all elements, including all elements and armouring for mechanical and fire protection, have the same or substantially the same thermal coefficient of expansion as the optical fibres. By the cable not containing metal elements of any kind, experiments have shown that the life of the cable during a fire will be drastically reduced.

Embodiments of the invention will now be described by way of example with reference to the accompanying diagrammatic drawing.

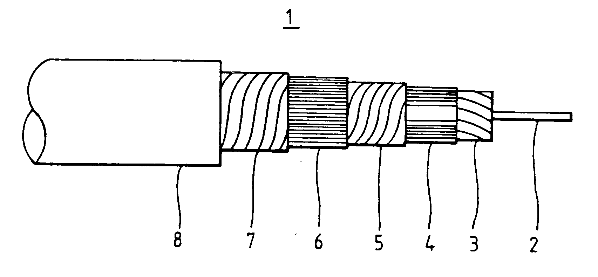

In the embodiment of the invention shown in the drawing, the cable 1 includes a glass fibre reinforced plastic tensile element 2 around which are stranded a number of elements 3. These elements include fibre optic elements, as well as filling elements made of non-combustible material such as glass fibre strings. Each of the optical fibre elements is provided with a primary layer of silicone (tradename Sylgard 184) and a secondary cladding of Nylon (Nylon 12).

The stranded unit containing the centre reinforcing element 2 and the stranded elements 3, are filled with silicone grease (AEI M 494), applied during the stranding process.

An optional polyester tape may be wound with each turn partly overlapping the next turn over the filled stranded unit to make up a silicone grease-filled fibre optic cable core.

Over the cable core there is applied, also with overlap, a layer of mica tape 5 for shielding the core against direct contact with flames

Next there is applied a layer of synthetic armouring 6 consisting of Kevlar fibres applied with a very long length of lay. Over the Kevlar armouring there is applied another layer 7 of overlapping micatape to protect the armouring.

The purpose of the synthetic armouring 6 is, in addition to providing efficient mechanical protection during handling and installation, to keep the two mica layers 5 and 7 separated in a fire situation and effectively assist in providing flame protection.

Experiments have shown that the configuration of mica tape layers 5 and 7 separated by a layer of synthetic armouring 6 adds substantially to the flame-resistant properties of the cable. In each layer of mica tape or the like there may be two or more windings of tape wound with overlap. 10-50% overlap is considered to be convenient.

Finally the fire protected and armoured cable core is included within an extruded sheath 8 of self-extinguishing halogen-free material such as silane crosslinked polyethylene bearing the tradename AEI 19407.

As will appear from the above, a cable according to this embodiment of the invention is free from any metallic wires, tapes and sheaths. This is considered to be an essential feature of the cable, but the combination of the silicon-filled core, the combined mica/Kevlar armouring and the outer halogen-free sheath are also considered to contribute to the good result obtained.

With reasonable and practical dimensions of the cable, it will not be possible to prevent heat from reaching the cable core. The cable described above having a diameter of about 5 mm will have little heat capacity and the temperature in the core will rise rapidly, although after a little delay, as a result of a temperature rise in the environment.

As compared with cables containing metal conductors as, for instance, multiconductor telephone or signal cables and where the cable retains circuit integrity as long as the conductors are insulated from each other and from the surroundings, a vital point in connection with fibre optic cable is that the fibres must be protected from direct contact with flames. If flames reach the fibre, the signal transmission properties will be destroyed. Increased flame protection will be obtained with several alternating layers containing mica and Kevlar. The outermost mica layer could preferably be made up of two overlapped mica tapes. A main point is that all layers of the cable would be gradually turned into ashes so that flames will not reach the optical glass fibres.

In an alternative embodiment the mica/Kevlar configuration 567 and space underneath the extruded sheath 8 are also filled with silicone grease of the type mentioned, or of other types.

In order to improve the temperature/time characteristics of the cable there may be introduced materials like aluminium hydroxide or other substances which are capable of releasing water of crystallisation at high temperatures in the outer sheath. Such materials may also be introduced in the silicone grease/mass used to impregnate the mica/Kevlar layers.

It should be understood that the design of the core may be varied with regard to the number and configuration of the longitudinal strain relief string and the optical elements. There is some doubt as to whether the optical elements may be embedded in, or loosely placed within grooves arranged on, the surface of a guide member made of insulation material. Such grooves may be arranged in helical form or in an oscillating fashion relatively to the longitudinal axis of the guide member and the cable in a so-called open groove construction. The design of the guide member must be chosen so as to minimise the risk of the grooves collapsing around the fibres. Such collapse during a fire could cause unforeseen mechanical tension in the fibres which could break. In contrast to the embodiment of the invention described above it should be clear that instead of the mica tapes described there could be used tapes or layers with equivalent properties like glass fibre tape impregnated with self-extinguishing materials such as those based on an aluminium hydroxide filled latex.

There may also be used other synthetic fibres in combination with or as a substitute for the mentioned Kevlar armour, and finally there could be used a variety of products in the silicone grease filling. The outer sheath described as being of polyethylene could also be made of alternative halogen-free materials.

## Claims

1. A fire-resistant fibre optic cable (1) comprising a core portion containing at least one central non-metallic tensile element (2) and at least one optical fibre element (3) stranded around said tensile element (2) with full backtwist, a first fire protecting layer (5) of a mica-containing material or other non-metallic material having equivalent fire resistant properties surrounding said core portion, an armoring layer (6) of synthetic material surrounding said first fire protecting layer (5), a second fire protecting layer (7) of a mica-containing material or other non-metallic material having equivalent fire resistant properties surrounding said armoring layer (6) and a sheath (8) of a self-extinguishing plastics material, wherein said tensile element(2), said layers (5,6,7,8) and said sheath have substantially the same coefficient of thermal expansion as said optical fibre element (3).

2. Fire-resistant fibre optic cable according to claim 1, characterised in that the core portion including possible filling elements is completely filled with a silicone-based mass and that the sheath (8) is extruded from self-extinguishing halogen-free plastics material.

3. Fire-resistant cable according to claim 1 or 2, characterised in that said synthetic armouring layer (6) comprises elements wound or braided over the first fire protecting layer (5) with a very long length of lay.

4. Fire-resistant cable according to claim 3 or 4, characterised in that a plurality of armouring layers are provided each of which is arranged between said first and said second fire protecting layers (5,7) of mica-containing or equivalent material.

5. Fire-resistant cable according to any one of the preceding claims, characterised in that the mica-containing material of the fire protecting layers is provided in the form of tapes wound with 10-50% overlap.

6. Fire-resistant cable according to any one of the preceding claims, characterized in that the outermost fire protecting layer of mica-containing material consists of at least two layers of mica tape.

7. Fire-resistant cable according to any one of the preceding claims, characterised in that all spaces underneath the sheath (8) are filled with a water-repellant mass such as silicone grease.

8. Fire-resistant cable according to any one of the preceding claims, characterised in that the core portion (2, 3) is covered with at least one layer of polyester tape (4) to stabilise the core configuration and ensure prolonged circuit integrity during high temperature conditions.

**Revendications**

1. Câble de fibres optiques (1), résistant au feu, comportant une portion constituant le noyau et contenant au moins un élément non métallique central (2) résistant à la traction et au moins un élément (3), constituant une fibre optique, monté en toron autour dudit élément (2), résistant à la traction, et présentant une forte torsion inverse, comportant aussi une première couche (5) de protection contre le feu, en un matériau contenant du mica ou autre matériau non métallique présentant des caractéristiques équivalentes de résistance au feu, entourant ladite portion constituant le noyau, comportant aussi une couche de blindage (6), en un matériau synthétique, entourant ladite première couche (5) de protection contre le feu, une seconde couche (7) de protection contre le feu, en matériau contenant du mica ou autre matériau non métallique présentant des caractéristiques équivalentes de résistance au feu, entourant ladite couche (6) constituant le blindage, et comportant aussi une gaine (8) de matériau plastique auto-extinguible, étant précisé que ledit élément (2) résistant à la traction, lesdites couches (5, 6, 7, 8) et ladite gaine ont sensiblement le même coefficient de dilatation thermique que ledit élément (3) constituant la fibre optique.

2. Câble de fibres optiques résistant au feu selon la revendication 1, caractérisé par le fait que la portion constituant le noyau et incluant d'éventuels éléments de charge est entièrement remplie d'une masse à base de silicone, et par le fait que la gaine (8) est extrudée en un matériau plastique auto-extinguible ne contenant pas d'halogène.

3. Câble résistant au feu selon la revendication 1 ou 2, caractérisé par le fait que ladite couche synthétique (6) constituant le blindage est constituée d'éléments bobinés ou tressés par dessus la première couche (5) de protection contre le feu, avec une très grande longueur de pas d'hélice.

4. Câble résistant au feu selon la revendication 3 ou 4, caractérisé par le fait qu'il est prévu une pluralité de couches constituant un blindage, dont chacune est placée entre ladite première et ladite seconde couches (5,7) de protection contre le feu en matériau contenant du mica ou équivalent.

5. Câble résistant au feu selon l'une quelconque des revendications précédentes, caractérisé par le fait que le matériau, contenant du mica, des couches de protection contre le feu est prévu sous forme de rubans bobinés avec recouvrement de 10-50%.

6. Câble résistant au feu selon l'une quelconque des revendications précédentes, caractérisé par le fait que la couche de protection contre le feu la plus extérieure, en matériau contenant du mica, est constituée d'au moins deux couches de ruban de mica.

7. Câble résistant au feu selon l'une quelconque des revendications précédentes, caractérisé par le fait que tous les espaces existant sous la gaine (8) sont remplis d'une masse imperméable à l'eau, telle que de la graisse de silicone.

8. Câble résistant au feu selon l'une quelconque des revendications précédentes, caractérisé par le fait que la portion (2,3) constituant le noyau est recouverte d'au moins une couche de ruban de polyester (4) pour stabiliser la configuration constituant le noyau et assurer l'intégrité prolongée du circuit dans des conditions de températures élevées.

**Patentansprüche**

1. Feuerbeständiges optisches Kabel (1), welches eine Seele aus zumindest einem zentralen nicht-metallischen Zugelement (2) und zumindest einer mit voller Rückdrehung um das Zugelement (2) herumverseilten optischen Faser, eine erste feuerbeständige Schicht (5) aus einem Glimmer enthaltenden Material oder einem anderen nichtmetallischen Material mit gleichen feuerbeständigen Eigenschaften, welche die Seele umgibt, eine Armierungslage (6) aus synthetischem Material, welche die erste feuerbeständige Schicht (5) umgibt, eine zweite feuerbeständige Schicht (7) aus einem Glimmer enthaltenden Material oder einem anderen nicht metallischen Material mit gleichen feuerbeständigen Eigenschaften, welche die Armierungslage (6) umgibt und einen Mantel (8) aus einem selbstverlöschenden Kunststoffmaterial aufweist, bei welchem das Zugelement (2) die Schichten (5,7), die Armierungslage (6) und der Mantel (8) im wesentlichen den gleichen Wärmeausdehnungskoeffizienten wie die optische Faser (3) haben.

2. Feuerbeständiges optisches Kabel nach Anspruch 1, dadurch gekennzeichnet, daß die Seele, die ggfs. Füllelemente bzw. Blindadern enthält, mit einer Masse auf Silikonbasis vollständig gefüllt ist, und daß der Mantel (8) aus selbstverlöschendem halogenfreiem Kunststoffmaterial extrudiert ist.

3. Feuerbeständiges optisches Kabel nach Anspruch 1 oder 2, dadurch gekennzeichnet, daß die synthetische Armierungslage (6) aus Elementen besteht, die mit einer sehr großen Schlaglänge auf die erste feuerbeständige Schicht (5) aufgewickelt oder aufgeflochten sind.

4. Feuerbeständiges optisches Kabel nach Anspruch 3, dadurch gekennzeichnet, daß eine Vielzahl von Armierungslagen vorgesehen ist, die zwischen der ersten und der zweiten feuerbeständigen Schicht (5,7) aus Glimmer enthaltenden oder ähnlichem Material angeordnet sind.

5. Feuerbeständiges optisches Kabel nach einem der vorhergehenden Ansprüche, dadurch gekennzeichnet, daß das Glimmer enthaltende Material der feuerbeständigen Schichten in Form von Bändern mit einer Überlappung von 10 - 50 % aufgewickelt ist.

6. Feuerbeständiges optisches Kabel nach einem der vorhergehenden Ansprüche, dadurch gekennzeichnet, daß die äußere feuerbeständige Schicht (7) aus Glimmer enthaltendem Material aus zumindest zwei Lagen aus Glimmerband besteht.

7. Feuerbeständiges optisches Kabel nach einem der vorhergehenden Ansprüche, dadurch gekennzeichnet, daß alle Hohlräume unterhalb des Mantels (8) mit einer wasserabweisenden Masse auf Silikonbasis gefüllt sind.

8. Feuerbeständiges optisches Kabel nach einem der vorhergehenden Ansprüche, dadurch gekennzeichnet, daß auf die Seele (2,3) zumindest eine Schicht aus Polyesterband (4) aufgebracht ist, um den Seelenaufbau festzulegen und eine lange Funktionsfähigkeit unter hohen Temperaturenbedingungen sicherzustellen.